# EUROPEAN PATENT APPLICATION

(11) **EP 3 598 610 A1**
(43) Date of publication of application: **22.01.2020**
(21) Application number: 18767351.2
(22) Date of filing: 29.01.2018
(51) Int. Cl.: H02K 1/27, H02K 21/14

(54) **ROTOR FOR DYNAMO-ELECTRIC MACHINE, AND DYNAMO-ELECTRIC MACHINE**

(30) Priority: 15.03.2017 JP 2017049788
(71) Applicant: Hitachi Automotive Systems, Ltd., Hitachinaka-shi, Ibaraki 312-8503 (JP)
(72) Inventor: ARAI, Yuki, Hitachinaka-shi Ibaraki 312-8503 (JP); YAMAZAKI, Shinji, Hitachinaka-shi Ibaraki 312-8503 (JP); KITAHARA, Motoo, Hitachinaka-shi Ibaraki 312-8503 (JP)
(74) Representative: Mewburn Ellis LLP
(86) International application number: PCT/JP2018/002730
(87) International publication number: WO 2018/168226

(57) **Abstract**

In a rotor, a permanent magnet 300 is an angulated pillar member of which the cross section perpendicular to the rotor shaft center is rectangular, and includes two pairs of facing side surfaces 310 to 340 which extend along the rotor shaft center, and the paired-up side surfaces 310 and 320 are provided such that one side surface is provided on a side near the rotor shaft center and the other one is provided on the outer peripheral side of the rotor. In the magnet storage slot 200A, a protruding portion 210 is provided which protrudes from an inner peripheral surface of the slot and abuts on a side surface 310 on a side near the rotor shaft center of any pair of side surfaces 310 and 320 in the two pairs. The protruding portion 210 applies, to the permanent magnet 300, an urging force F in which a component force F2 in the outer peripheral direction of the rotor along the abutting side surface 310 and a component force F1 in the outer peripheral direction of the rotor along the side surface 340 adjacent to the side surface 310 are not zero.

## Description

### Technical Field

The present invention relates to a rotor of a rotary electric machine, and a rotary electric machine which includes the rotor.

### Background Art

As one of rotors of a rotary electric machine, there is a rotor of a permanent magnet embedded type (for example, see PTL 1). In the rotor of the permanent magnet embedded type disclosed in PTL 1, a permanent magnet of which the cross section is rectangular is disposed in a hole for embedding the permanent magnet formed in the rotor. An elastic fixing projection is formed in the hole for embedding the permanent magnet is formed in each of two side surfaces of magnet which are provided in a longitudinal direction and face each other. The elastic fixing projection is pressed to position and fix the permanent magnet in the longitudinal direction.

### Citation List

### Patent Literature

PTL 1: JP 2011-259610 A

### Summary of Invention

### Technical Problem

However, when the rotor rotates, the elastic fixing projection is elastically deformed by a centrifugal force operating on the permanent magnet, and the permanent magnet may move in the longitudinal direction. Further, in the case of the configuration of the rotor described in PTL 1, if the shape and the displacement of the permanent magnet are ideally bisymmetrical to a radius passing a gravity center of the permanent magnet, the component of the centrifugal force in the longitudinal direction of the magnet becomes zero. However, exact bisymmetry is hardly obtained due to an actual machining tolerance, and the component of the centrifugal force in the longitudinal direction of the magnet does not become zero.

Therefore, a movement in the longitudinal direction of the permanent magnet occurs, and abrasion between the magnet and the rotor core causes a problem. In particular, in a case where the magnet fixing method described in PTL 1 is applied to a rotor in which the permanent magnets are disposed in a V shape, the component of the centrifugal force in the longitudinal direction of the magnet does not become zero in the V-like layout. Thus, the abrasion is inevitable.

### Solution to Problem

According to an aspect of the invention, there is provided a rotor of a rotary electric machine where a permanent magnet is disposed in a slot for storing a magnet of a rotor core, wherein the permanent magnet is an angulated pillar member of which a cross section perpendicular to a rotor shaft center is rectangular, and includes two pairs of facing side surfaces which extend along the rotor shaft center, the paired-up side surfaces are provided such that one side surface is provided on a side near the rotor shaft center, and the other one is provided on an outer peripheral side of the rotor, in the slot for storing a magnet, a first protruding portion is provided which protrudes from an inner peripheral surface of the slot and abuts on a side surface on a side near the rotor shaft center of any pair of side surfaces in the two pairs, and the first protruding portion applies, to the permanent magnet, the urging force in which a first component force in an outer peripheral direction of the rotor along the abutting side surface and a second component force in the outer peripheral direction of the rotor along the side surface adjacent to the abutting side surface are not zero.

According to another aspect of the invention, the rotary electric machine includes a stator and the above described rotor.

### Advantageous Effects of Invention

According to the invention, it is possible to prevent abrasion between a magnet and a rotor core caused by a centrifugal force.

### Brief Description of Drawings

[FIG. 1] FIG. 1 is a cross-sectional view illustrating an embodiment of a rotary electric machine.
[FIG. 2] FIG. 2 is a diagram illustrating a cross section of a rotor.
[FIG. 3] FIG. 3 is an enlarged view of Symbol B of FIG. 2.
[FIG. 4] FIG. 4 is a diagram for describing an example of bending machining of a protruding portion using a tool.
[FIG. 5] FIG. 5 is a diagram illustrating a first modification.
[FIG. 6] FIG. 6 is a diagram illustrating a second modification.
[FIG. 7] FIG. 7 is a diagram for describing a process in which the protruding portion is deformed to abut on the side surface of a permanent magnet.
[FIG. 8] FIG. 8 is a diagram illustrating a second embodiment of the invention.
[FIG. 9] FIG. 9 is a diagram illustrating the protruding portion after deformation.
[FIG. 10] FIG. 10 is a perspective view specifically illustrating a shape of a magnet storage slot.
[FIG. 11] FIG. 11 is a diagram for describing a stacking method of rotor core steel plates.
[FIG. 12] FIG. 12 is a diagram illustrating a part of a rotor core in which the magnet storage slots, each having two protruding portions, are disposed in a V shape.
[FIG. 13] FIG. 13 is a diagram illustrating a third modification.
[FIG. 14] FIG. 14 is a diagram illustrating a case where two permanent magnets forming a magnetic pole are disposed in a straight line.

### Description of Embodiments

Hereinafter, embodiments of the invention will be described with reference to the drawings.

### - First Embodiment -

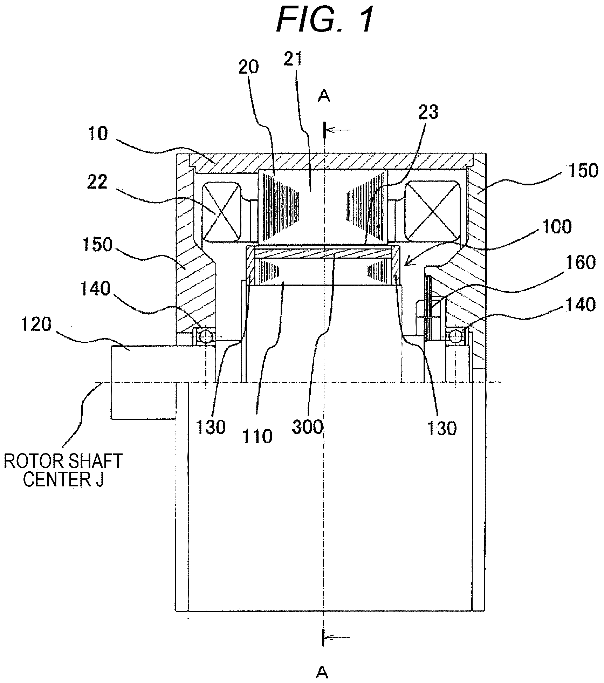

FIG. 1 is a cross-sectional view illustrating an embodiment of a rotary electric machine. A stator 20 is supported in a housing 10. The stator 20 includes a stator core 21 and a stator winding 22. On an inner peripheral side of the stator core 21, a rotor 100 is rotatably supported through a gap 23. The rotor 100 includes a rotor core 110 fixed to a shaft 120, a permanent magnet 300, and a plate 130 of a non-magnetic material. The housing 10 includes a pair of end brackets 150 where a bearing 140 is provided, and the shaft 120 is rotatably supported by the bearings 140. In the shaft 120, there is provided a resolver 160 to detect a position of the pole of the rotor 100 and a rotation speed.

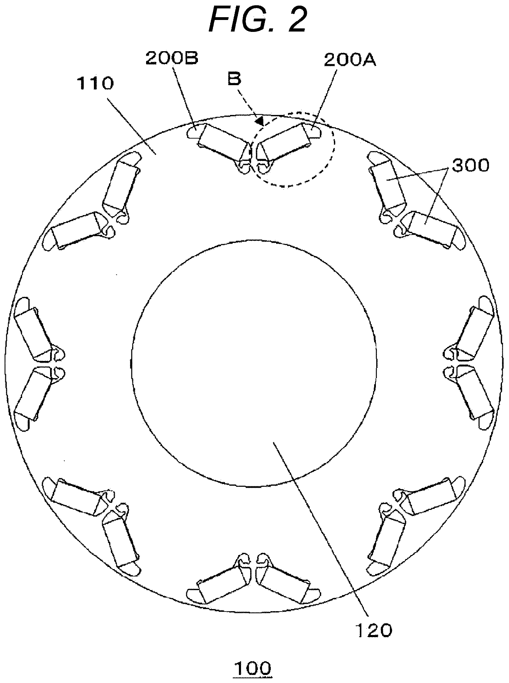

FIG. 2 is a diagram illustrating a cross section (a cross section taken along A-A of FIG. 1) of the rotor 100. Magnet storage slots 200A and 200B are formed in the rotor 100. A pair of permanent magnets 300 is fixed to the magnet storage slots 200A and 200B in a V shape. One magnetic pole is configured by the pair of permanent magnets 300.

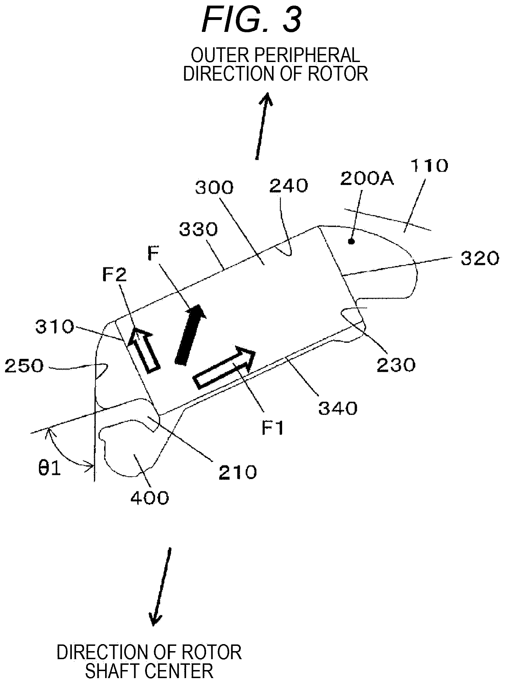

FIG. 3 is an enlarged view illustrating a portion (a portion indicated with Symbol B) of the magnet storage slot 200A where the permanent magnet 300 of FIG. 2 is disposed. Further, the shape of each portion of the magnet storage slot 200B is bisymmetrical to the magnet storage slot 200A. In the following, the description will be given about the magnet storage slot 200A. In the magnet storage slot 200A, a protruding portion 210 is formed to protrude from the inner peripheral surface of the slot. The cross section of the permanent magnet 300 is almost a rectangular shape, and forms an angulated pillar member having four side surfaces 310, 320, 330, and 340. The side surfaces 310, 320, 330, and 340 are formed along a rotor shaft center J of FIG. 1.

The protruding portion 210 abuts on the side surface 310 of the permanent magnet 300, and urges the permanent magnet 300 to an outer peripheral direction of the rotor with an urging force F. The side surface 320 is provided to face the side surface 310 abutting on the protruding portion 210. In addition, a pair of facing side surfaces 330 and 340 is provided to connect the side surface 310 and the side surface 320. The side surface 320 is disposed on the outer peripheral side of the rotor from the side surface 310. The side surface 330 is disposed on the outer peripheral side of the rotor from the side surface 340.

Further, a gap is formed such that the protruding portion 210 does not come in contact with the side surface 310 of the permanent magnet 300 when the permanent magnet 300 is stored in the magnet storage slot 200A. As described below, after storing the permanent magnet 300, the protruding portion 210 is bent and abuts on the side surface 310 to fix the permanent magnet 300.

The urging force F operating from the protruding portion 210 to the permanent magnet 300 can be decomposed into a component force F1 in a longitudinal direction of the permanent magnet 300 and a component force F2 in a lateral direction (thickness direction). The permanent magnet 300 is urged to the outer peripheral side of the rotor in the longitudinal direction by the component force F1. The side surface 320 corresponds to a positioning portion 230 formed in the magnet storage slot 200A. As a result, the positioning in the longitudinal direction of the permanent magnet 300 is performed. In addition, the permanent magnet 300 is urged to the outer peripheral side of the rotor by the component force F2. The side surface 330 abuts on a wall surface 240 of the outer peripheral side of the rotor of the magnet storage slot 200. With this configuration, the positioning of the lateral direction of the permanent magnet 300 is performed. In other words, the wall surface 240 serves as a second positioning portion related to the lateral direction of the permanent magnet 300.

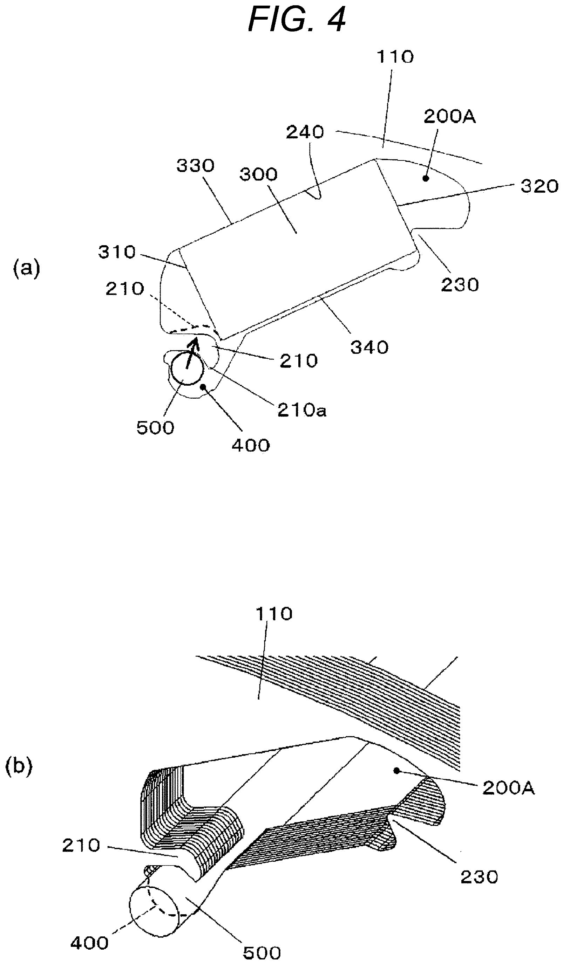

FIG. 4 is a diagram for describing an example of bending machining of the protruding portion 210 using a tool. First, as illustrated in FIG. 4(a), the permanent magnet 300 is inserted into the magnet storage slot 200A. At that time point, the protruding portion 210 is not bent, and a gap is formed between the protruding portion 210 and the side surface 310 of the permanent magnet 300.

Next, as illustrated in FIG. 4(b), a rod-like deformed tool 500 is inserted to a tool insertion space 400 on a side near a rotor shaft center from the protruding portion 210 of the magnet storage slot 200. Thereafter, as illustrated with an arrow of FIG. 4(a), the deformed tool 500 is moved to the outer peripheral side of the rotor. As illustrated with a broken line, the root portion of the protruding portion 210 is elastically deformed to bend the protruding portion 210 in a direction of the side surface 310 of the permanent magnet 300. At that time, even after the tip of the protruding portion 210 comes into contact with the side surface 310, the elastic force caused by the elastic deformation of the tip of the protruding portion (the urging force F illustrated in FIG. 3) elastically deforms the root portion furthermore by the operation of the permanent magnet 300. As a result, the side surface 320 of the permanent magnet 300 abuts on the positioning portion 230, and the side surface 330 abuts on the wall surface 240. With this configuration, the permanent magnet 300 is fixed into the magnet storage slot 200A of the rotor core 110.

As illustrated in FIG. 3, the urging force F operating from the protruding portion 210 to the permanent magnet 300 faces the outer peripheral direction of the rotor. Therefore, the permanent magnet 300 is configured such that the side surfaces 320 and 330 on the outer peripheral side of the rotor abut on the positioning portion 230 and the wall surface 240 respectively. Therefore, even when a centrifugal force operates on the permanent magnet 300 when the rotor rotates, the permanent magnet does not move in the longitudinal direction and the lateral direction, so that abrasion is prevented between the permanent magnet 300 and the rotor core 110.

Further, as illustrated in FIG. 4, a protrusion 210a which protrudes toward the tool insertion space 400 is formed in the tip of the protruding portion 210, and the surface of the protruding portion 210 on a side near the space 400 is formed in an arc shape. Therefore, when the protruding portion 210 is bent, the deformed tool 500 is securely engaged by the protrusion 210a. Therefore, a workability of bending process of the deformed tool 500 is improved.

As described above, in this embodiment, as illustrated in FIG. 3, the permanent magnet 300 is an angulated pillar member of which the cross section perpendicular to the rotor shaft center is rectangular, includes two pairs of facing side surfaces 310, 320, 330, and 340 extending along the rotor shaft center. For example, in the case of the paired-up side surfaces 310 and 320, one side surface 310 is provided on a side near the rotor shaft center, and the other side surface 320 is provided on the outer peripheral side of the rotor. In the magnet storage slot 200A, there is provided the protruding portion 210 which protrudes from the inner peripheral surface of the slot and abuts on the side surface 310 on a side near the rotor shaft center of any pair of side surfaces 310 and 320 in the two pairs. The protruding portion 210 applies, to the permanent magnet 300, the urging force F of which the component force F2 of the outer peripheral direction of the rotor along the abutting side surface 310 and the component force F1 of the outer peripheral direction of the rotor along the side surface 340 adjacent to the abutting side surface 310 are not zero.

In this way, in this embodiment, the protruding portion 210 applies the urging force F which can be decomposed into the component forces F1 and F2 to the permanent magnet 300. The permanent magnet 300 is positioned to abut on the positioning portion 230 and the wall surface 240 on the outer peripheral side of the rotor. Therefore, even in a case where the centrifugal force caused by the rotation of the rotor operates on the permanent magnet 300, the component forces F1 and F2 are not cancelled by the centrifugal force, a positional deviation (that is, movement) of the permanent magnet 300 in the magnet storage slot 200A can be prevented, and abrasion between the magnet and the rotor core can be prevented. Of course, since the urging force of the protruding portion 210 always operates, a gap is generated between the positioning portion 230 and the wall surface 240 and the permanent magnet 300 even in a state where the rotor is stopped, so that the permanent magnet 300 is not deviated.

In addition, as illustrated in FIG. 4, in the magnet storage slot 200A, the tool insertion space 400 is provided to deform the protruding portion 210 to a side near the rotor shaft center from the protruding portion 210. Therefore, the deforming process of the protruding portion 210 can be made easily using the deformed tool 500, and the working efficiency can be improved.

### (First Modification)

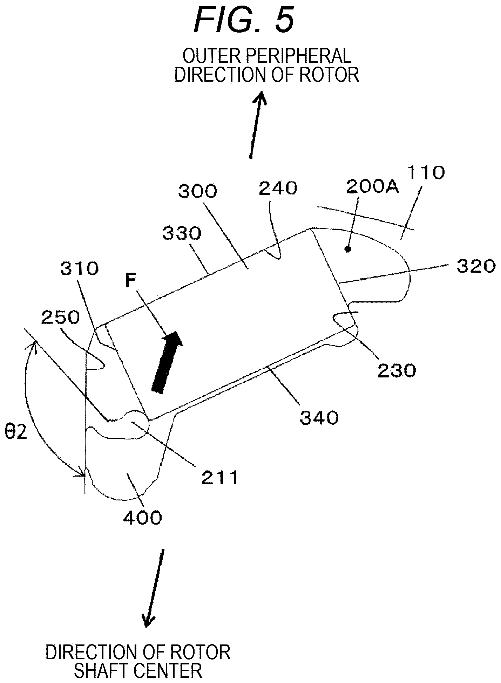

FIG. 5 is a diagram illustrating a first modification of the embodiment. In the first modification, a protruding portion 211 illustrated in FIG. 5 is provided instead of the protruding portion 210 illustrated in FIG. 3. In the case of the protruding portion 210 of FIG. 3, an angle θ1 formed with the wall surface 250 of the magnet storage slot 200A which faces the side surface 310 of the permanent magnet 300 is an acute angle. However, in the case of FIG. 5, an angle θ2 is not an obtuse angle.

Even the protruding portion 211 having such a shape abuts on the side surface 310 of the permanent magnet 300, and the urging force F of the outer peripheral direction of the rotor operates on the permanent magnet 300. As a result, similarly to a case where the protruding portion 210 illustrated in FIG. 3 is provided, the permanent magnet 300 does not move in the longitudinal direction and the lateral direction when the rotor rotates, so that abrasion can be prevented between the permanent magnet 300 and the rotor core 110.

### (Second Modification)

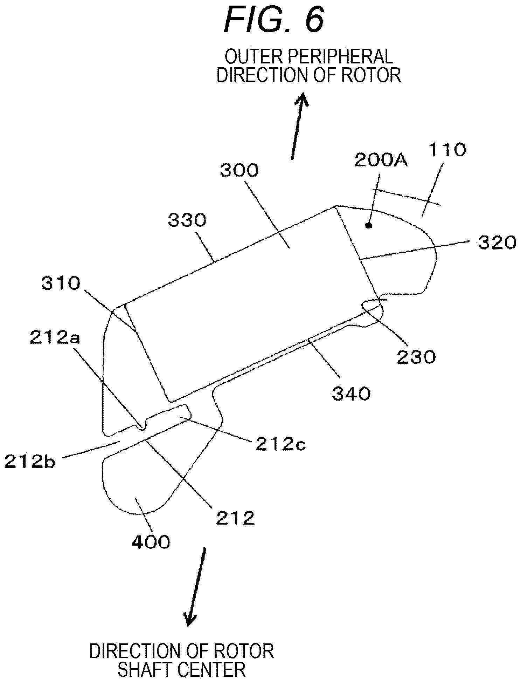

FIG. 6 is a diagram illustrating a second modification of the embodiment. In the second modification, the shape of a protruding portion 212 is different from those of the protruding portions 210 and 211 illustrated in FIGS. 3 and 5. The configurations other than the protruding portion 212 are similar to those of the embodiment. The protruding portion 212 includes a concave portion 212a which is formed in the side surface of the protruding portion 212, an elastically deforming portion 212b which is formed on the inner peripheral surface side of the slot from the concave portion 212a, and an abutting portion 212c which is formed on a tip side from the concave portion 212a. Further, FIG. 6 illustrates a shape before the protruding portion 212 is deformed to abut on the side surface 310 of the permanent magnet 300.

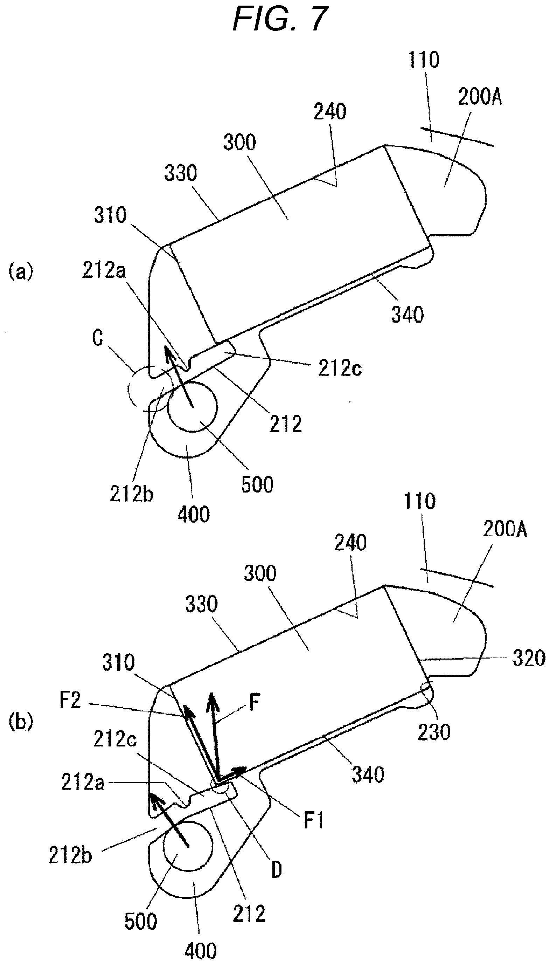

FIG. 7 is a diagram for describing a process in which the protruding portion 212 is deformed to abut on the side surface 310 of the permanent magnet 300. As illustrated in FIG. 7(a), the deformed tool 500 is pressed to the elastically deforming portion 212b of the protruding portion 212 to press the protruding portion 212 in a direction of arrow. As a result, the root portion (a portion indicated with Symbol C) of the elastically deforming portion 212b is elastically deformed, and the abutting portion 212c abuts on the side surface 340 of the permanent magnet 300.

Next, as illustrated in FIG. 7(b), when the elastically deforming portion 212b is pressed and bent furthermore from the state of FIG. 7(a), the concave portion 212a is elastically deformed. As a result, the urging force F elastically deforming the protruding portion 212 operates on the permanent magnet 300. In the example illustrated in FIG. 7(b), the abutting portion 212c abuts on a corner (a portion of Symbol D) where the side surface 310 and the side surface 340 intersects, and the urging force F operates on the outer peripheral direction of the rotor. The urging force F can be decomposed into the component forces F1 and F2. The side surface 330 of the permanent magnet 300 abuts on the wall surface 240 on the outer peripheral side of the rotor of the magnet storage slot 200 by the component force F2. In addition, the side surface 320 of the permanent magnet 300 abuts on the positioning portion 230 by the component force F1. As a result, the permanent magnet 300 is fixed into the magnet storage slot 200A.

As described above, the protruding portion 212 in the second modification includes, as illustrated in FIG. 7, the concave portion 212a which is formed between the inner peripheral surface side of the slot and the tip side of the rotor, the elastically deforming portion 212b on the inner peripheral surface side of the slot from the concave portion 212a, and the abutting portion 212c on the tip side from the concave portion 212a. In the case of such a configuration, the elastic force generated by the elastic deformation of the concave portion 212a operates on the permanent magnet 300 as the urging force F.

In this way, the pressing portion 212a is provided in the protruding portion 212, so that the bending amount of the concave portion 212a is adjusted even though a variation of the gap is large. Therefore, the abutting portion 212c can come into contact with the permanent magnet 300 with a desired urging force. In other words, with the concave portion 212a, the elastic force can be kept less even the bending amount is large. Even in a case where the gap is large and thus the bending amount is large, the urging force operating on the permanent magnet 300 can be prevented from being too much.

### - Second Embodiment -

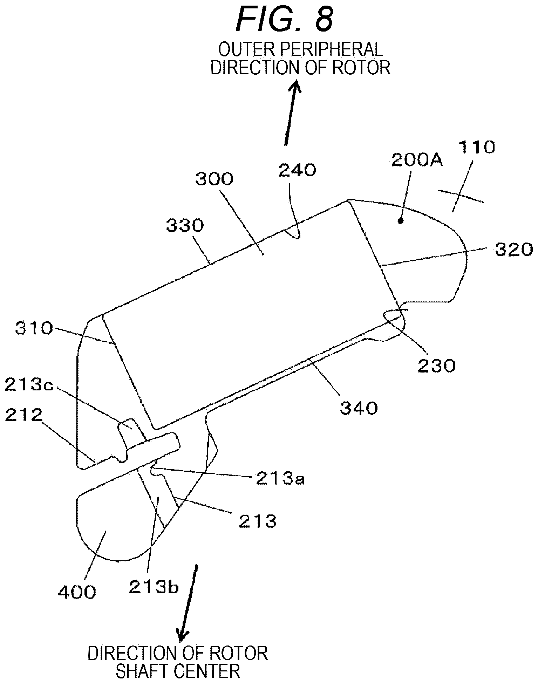

FIG. 8 is a diagram illustrating a second embodiment of the invention. In the second embodiment, the fixation to the magnet storage slots 200A and 200B of the permanent magnet 300 is made using two protruding portions 212 and 213. The configurations other than the protruding portions 212 and 213 are similar to those illustrated in FIG. 6. The shape of the protruding portion 213 is similar to the protruding portion 212, and includes a concave portion 213a which is formed in the side surface of the protruding portion 213, an elastically deforming portion 213b which is formed on the inner peripheral surface side of the slot from the concave portion 213a, and an abutting portion 213c which is formed on a tip side from the concave portion 213a.

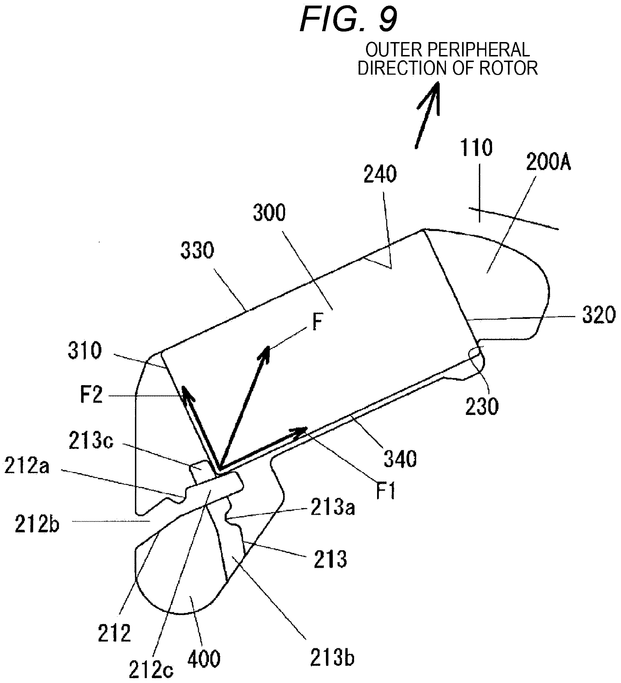

FIG. 8 illustrates a state before the protruding portions 212 and 213 are deformed, and become the shape illustrated in FIG. 9 after deformation. In FIG. 9, the protruding portion 212 is configured such that the concave portion 212a is elastically deformed to cause the abutting portion 212c to abut on the side surface 340 of the permanent magnet 313 similarly to the case of FIG. 7(b). On the other hand, the protruding portion 213 is configured such that the concave portion 213a is elastically deformed to cause the abutting portion 213c to abut on the side surface 310 of the permanent magnet 300. A force F obtained by combining the elastic force operating from the protruding portions 212 and 213 to the permanent magnet 300 operates on the permanent magnet 300 as the urging force of the outer peripheral direction of the rotor.

The urging force F in this case is a resultant force of the urging force of the protruding portion 212 and the urging force of the protruding portion 213. Then, the side surface 330 of the permanent magnet 300 abuts on the wall surface 240 on the outer peripheral side of the rotor of the magnet storage slot 200 by the component force F2 of the urging force F. The side surface 320 of the permanent magnet 300 abuts on the positioning portion 230 by the component force F1. In the case of this embodiment, the protruding portion 213 is further provided, so that the urging force (the component forces F1 and F2) causing the permanent magnet 300 to abut on the positioning portion 230 and the wall surface 240 on the outer peripheral side of the rotor can be made large compared to the case of the second modification illustrated in FIG. 6.

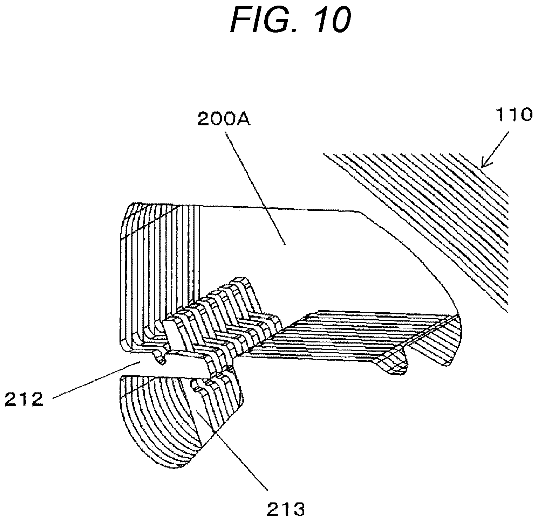

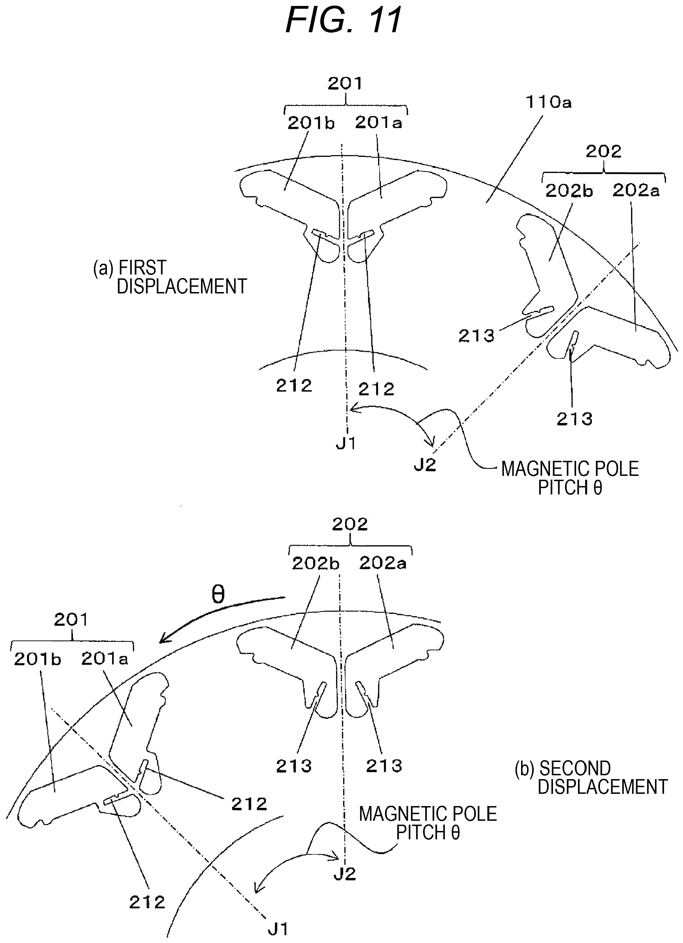

FIG. 10 is a perspective view specifically illustrating the shape of the rotor core 110 of the magnet storage slot 200A. The rotor core 110 is formed by stacking a plurality of rotor core steel plates 110a illustrated in FIG. 11. As illustrated in FIG. 11, two types of slot opening pairs 201 and 202 to dispose the permanent magnet 300 in a V shape are formed in the rotor core steel plate 110a to be alternately disposed at a magnetic pole pitch θ in a circumferential direction of the rotor core steel plate 110a.

Further, FIG. 11(b) illustrates that the rotor core steel plate 110a illustrated in FIG. 11(a) is deviated by a phase of the magnetic pole pitch θ (that is, rotated by the magnetic pole pitch θ). In the following, the displacement of FIG. 11(a) will be called a first displacement, and the displacement will illustrated in FIG. 11(b) will be called a second displacement.

A pair of slot openings 201a and 201b forming the slot opening pair 201 is formed bisymmetrically with respect to a radius J1 which passes through a magnetic pole position. The protruding portion 212 formed in the slot openings 201a and 201b are also formed at positions symmetrical with respect to the radius J1. On the other hand, a pair of slot openings 202a and 202b forming the slot opening pair 202 is formed bisymmetrically with respect to a radius J2 which passes through a magnetic pole position. The protruding portion 213 formed in the slot openings 202a and 202b are also formed at positions symmetrical with respect to the radius J2.

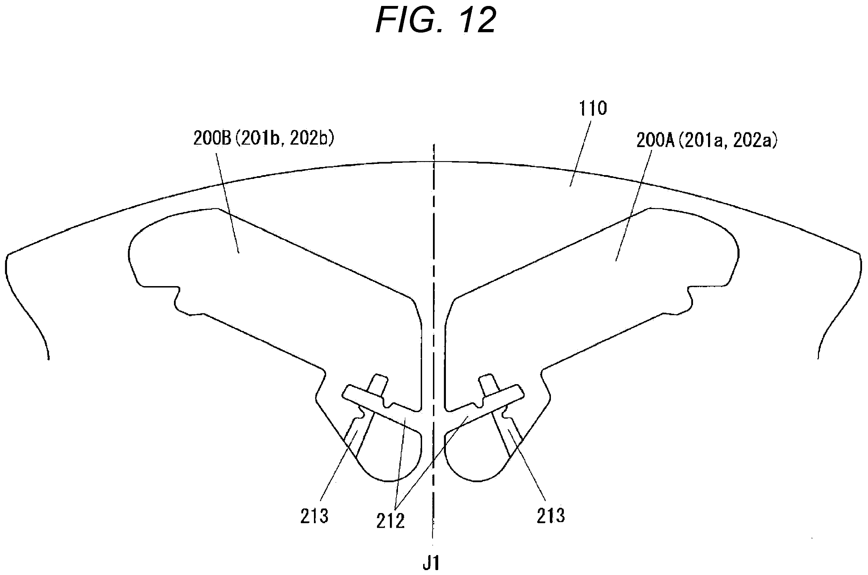

The rotor core steel plate 110a of the first displacement illustrated in FIG. 11(a) and the rotor core steel plate 110a of the second displacement illustrated in FIG. 11(b) are alternately stacked so as to form the rotor core 110 as illustrated in FIG. 12. The slot opening 202a formed in the rotor core steel plate 110a of the second displacement is disposed at the same position as the slot opening 201a formed in the rotor core steel plate 110a of the first displacement, facing each other. As a result, as illustrated in FIG. 12, there is formed the magnet storage slot 200A which includes the protruding portions 212 and 213.

On the other hand, the slot opening 202b formed in the rotor core steel plate 110a of the second displacement is disposed at the same position as the slot opening 201b formed in the rotor core steel plate 110a of the first displacement, facing each other. As a result, as illustrated in FIG. 12, there is formed the magnet storage slot 200B which includes the protruding portions 212 and 213.

In the second embodiment, as illustrated in FIG. 9, in addition to the protruding portion 212 illustrated in FIG. 6, the magnet storage slot 200A is provided with a second protruding portion 213 which protrudes from the inner peripheral surface of the slot and abuts on the side surface 310 on a side near the rotor shaft center of the other pair of side surfaces 310 and 320. The protruding portion 213 applies, to the permanent magnet 300, the urging force F of which the component force F2 of the outer peripheral direction of the rotor along the abutting side surface 310 and the component force F1 of the outer peripheral direction of the rotor along the side surface 340 adjacent to the abutting side surface 310 are not zero.

In each of the stacked rotor core steel plates 110a, as illustrated in FIG. 11, the slot opening 201a formed with the protruding portion 212 and the slot opening 202a which is provided to be deviated from the slot opening 201a by the magnetic pole pitch θ and includes the protruding portion 213 are formed alternately in the circumferential direction. Then, the plurality of rotor core steel plates 110a forming the rotor core 110 are alternately stacked such that the slot opening 201a and the slot opening 202a face each other.

In this way, in the second embodiment, the slot openings 201a and 201b where the protruding portion 212 is formed and the slot openings 202a and 202b where the protruding portion 213 is formed are adjacent in the stacking direction in the same rotor core steel plate 110a, and the rotor core steel plate 110a adjacent in the stacking direction is stacked to be deviated by the magnetic pole pitch θ. Therefore, it is possible to easily form the magnet storage slots 200A and 200B which include the two protruding portions 212 and 213 using one type of rotor core steel plate 110a.

### (Third Modification)

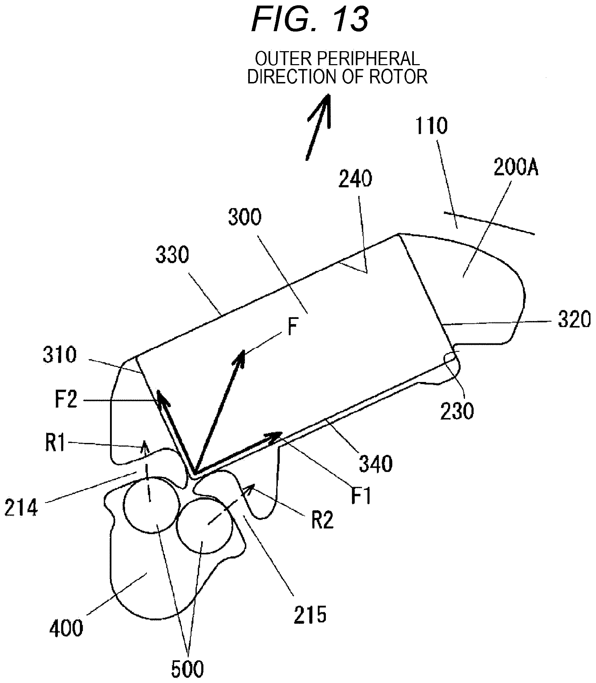

FIG. 13 is a diagram illustrating a third modification which is a modification of the second embodiment. In the third modification, a protruding portion 214 and a protruding portion 215 are formed in the same rotor core steel plate. In the example illustrated in FIG. 13, the shape of the protruding portion 214 is made in a shape similar to the protruding portion 210 illustrated in FIG. 3, and moves the deformed tool 500 in a direction of arrow R1 with respect to the protruding portion 214, so that the tip portion of the protruding portion 214 abuts on the side surface 310 of the permanent magnet 300. On the other hand, the protruding portion 215 is formed in a shape bisymmetrical to the protruding portion 214, and moves the deformed tool 500 in a direction of arrow R2 with respect to the protruding portion 215, so that the tip portion of the protruding portion 215 abuts on the side surface 340 of the permanent magnet 300.

The urging force F is a force obtained by combining the urging force caused by the protruding portion 214 and the urging force caused by the protruding portion 215. The side surface 320 of the permanent magnet 300 abuts on the positioning portion 230 by the component force F1 of the urging force F. The side surface 330 of the permanent magnet 300 abuts on the wall surface 240 of the magnet storage slot 200A by the component force F2. As a result, the permanent magnet 300 is fixed into the magnet storage slot 200A. In this way, in the third modification, the protruding portions 214 and 215 are formed in the same rotor core steel plate. Therefore, like the case of the configuration illustrated in FIG. 11, there is no need to deviate the phase when stacking the rotor core steel plates by the magnetic pole pitch θ.

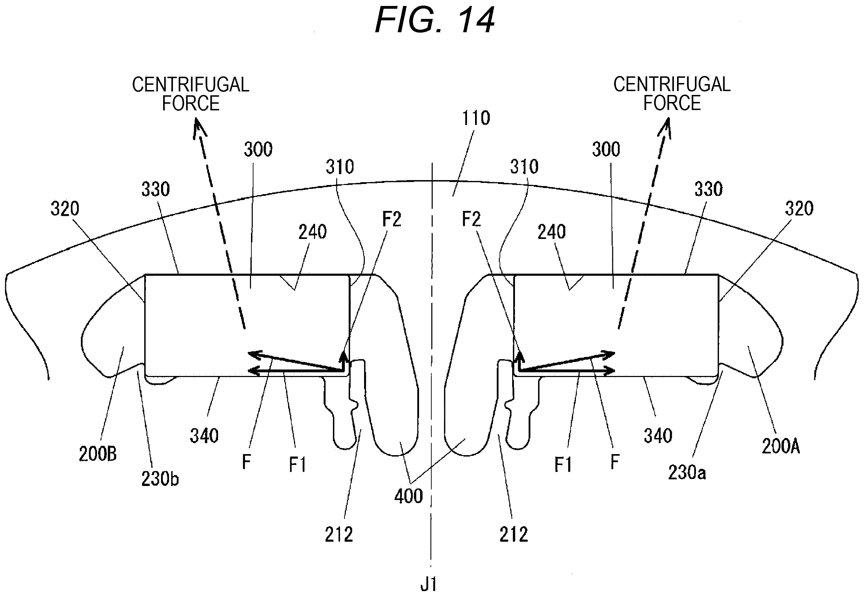

Further, the description in the embodiment has been given about a case where the permanent magnets 300 are disposed in a V shape. However, as illustrated in FIG. 14, the invention may be applied similarly even to a configuration where a pair of permanent magnets 300 is disposed on a straight line. In the example illustrated in FIG. 14, the magnet storage slots 200A and 200B are disposed on a straight line bisymmetrically with respect to the radius J1 passing the magnetic pole position. The protruding portion 212 abuts on near the corner formed by the side surface 310 and the side surface 340 of the permanent magnet 300, and applies the urging force F in the outer diameter direction of the rotor with respect to the permanent magnet 300. The permanent magnet 300 is formed such that the side surface 320 abuts on the positioning portion 230 by the component force F1, and the side surface 330 abuts on a wall surface 340 by the component force F2.

The centrifugal force added to the permanent magnet 300 operates in the radius direction from the gravity center of the permanent magnet when the rotor rotate as illustrated with a broken arrow, so that the permanent magnet 300 is urged to the positioning portion 230 and the wall surface 240. Therefore, similarly to the case of the embodiment, the abrasion between the magnet and the rotor core caused by the influence of the centrifugal force can be prevented. Further, the example illustrated in FIG. 14 has described a case where one protruding portion 212 is provided in the magnet storage slots 200A and 200B. However, the two protruding portions 211 and 213 may be provided similarly to the case illustrated in FIG. 9. Further, the protruding portions 210, 211, 214, and 215 may be provided as illustrated in FIGS. 4, 5, and 13.

Various embodiments and modifications have been described, but the invention is not limited to these contents. Other aspects which are conceivable within a scope of technical ideas of the invention may be made within the scope of the invention.

### Reference Signs List

- 20: stator
- 100: rotor
- 110a: rotor core steel plate
- 200A, 200B: magnet storage slot
- 201a, 201b, 202a, 202b: slot opening
- 210, 211, 212, 213, 214, 215: protruding portion
- 212a, 213a: concave portion
- 212b, 213b: elastically deforming portion
- 212c, 213c: abutting portion
- 230: positioning portion
- 240: wall surface
- 300: permanent magnet
- 310, 320, 330, 340: side surface
- 400: tool insertion space
- 500: deformed tool

## Claims

1. A rotor of a rotary electric machine where a permanent magnet is disposed in a slot for storing a magnet of a rotor core, wherein
the permanent magnet is an angulated pillar member of which a cross section perpendicular to a rotor shaft center is rectangular, and includes two pairs of facing side surfaces which extend along the rotor shaft center,
the paired-up side surfaces are provided such that one side surface is provided on a side near the rotor shaft center, and other one is provided on an outer peripheral side of the rotor,
in the slot for storing a magnet, a first protruding portion is provided which protrudes from an inner peripheral surface of the slot and abuts on a side surface on a side near the rotor shaft center of any pair of side surfaces in the two pairs, and
the first protruding portion applies, to the permanent magnet, an urging force in which a first component force in an outer peripheral direction of the rotor along the abutting side surface and a second component force in the outer peripheral direction of the rotor along the side surface adjacent to the abutting side surface are not zero.

2. The rotor of the rotary electric machine according to claim 1, wherein
in the slot for storing a magnet, in addition to the first protruding portion, a second protruding portion is provided which protrudes from the inner peripheral surface of the slot and abuts on a side surface on a side near the rotor shaft center of another pair of side surfaces in the two pairs, and
the second protruding portion applies, to the permanent magnet, the urging force in which a third component force in an outer peripheral direction of the rotor along the abutting side surface and a fourth component force in the outer peripheral direction of the rotor along the side surface adjacent to the abutting side surface are not zero.

3. The rotor of the rotary electric machine according to claim 1 or 2, wherein
in the slot for storing a magnet, a tool insertion space is provided to deform the protruding portion which is formed on a side near the rotor shaft center from the protruding portion.

4. The rotor of the rotary electric machine according to claim 1 or 2, wherein
the protruding portion includes a concave portion which is formed between an inner peripheral surface side of the slot and a tip side of the rotor, an elastically deforming portion on the inner peripheral surface side of the slot from the concave portion, and an abutting portion on a tip side from the concave portion.

5. The rotor of the rotary electric machine according to claim 2, wherein
the rotor core is formed by stacking a plurality of rotor core steel plates where the first protruding portion and the second protruding portion are provided.

6. The rotor of the rotary electric machine according to claim 5, wherein
in the rotor core steel plate, a first slot opening where the first protruding portion is formed and a second slot opening, the second slot opening being provided to be deviated by a magnetic pole pitch with respect to the first slot opening and includes the second protruding portion, are formed alternately in a circumferential direction, and
the plurality of rotor core steel plates forming the rotor core are alternately stacked such that the first slot opening and the second slot opening face each other.

7. A rotary electric machine, comprising:
a stator; and
the rotor of the rotary electric machine according to any one of claims 1 to 6.
